# EUROPEAN PATENT APPLICATION

(11) **EP 3 561 013 A1**
(43) Date of publication of application: **30.10.2019**
(21) Application number: 18460052.6
(22) Date of filing: 06.09.2018
(51) Int. Cl.: C09J 7/29, C08K 5/00

(54) **WARNING TAPE FOR DETECTING HOT SURFACES**

(30) Priority: 25.04.2018 PL 12728118 U
(71) Applicant: Mianowski, Ireneusz, 82-300 Elblag (PL)
(72) Inventor: Mianowski, Ireneusz, 82-300 Elblag (PL)
(74) Representative: Tyszka, Teresa

(57) **Abstract**

Warning tape for detecting hot surfaces which has a multi-layer structure contains a substrate layer (**1**) made of polyester foil with thickness from 20µm to 400µm, on which on the top there is a layer (**2**) with inscription in warning colours and with thickness from 5µm to 50µm, covered by a monochromatic thermochromic layer (**3**) with thickness from 10µm to 150µm, non-transparent in temperatures below 60°C. The thermochromic layer (**3**) is secured by a layer (**4**) of transparent polyester laminate with thickness from 5 to 300µm. On the bottom on the substrate layer (**1**) there is a self-adhesive layer (**5**) which has thickness from 10µm to 140µm, secured by an anti-adhesive foil or paper (**6**). In temperatures above 60°C the thermochromic layer (**3**) is transparent for the underneath layer (**2**) containing warning inscription.

## Description

The subject of the utility model is a warning tape for detecting hot surfaces designed for visual warning about exceeding of the permissible temperature as an indicator affixed to gas pipes, liquid energy factor pipelines or to any other surfaces the temperature of which can exceed the value above which it can cause burns.

There are visual temperature indicators known, based on thermochromism i.e. the ability of a material to change colour under the influence of temperature change, used in production of cups with a temperature-reacting coating, jugs, paints and inks which change colour under the influence of temperature.

From the patent application WO2007130246 a solution is known concerning a tape adhering device having thermochromic properties and a tape used in that device. Tape is used for packing of articles sensitive to high or low temperatures, especially collective packages of medicines, biotechnological factors, food and beverage, destined for transport or storage. The tape has a multi-layer structure and includes a thermochromic layer which reacts by permanent change of colour both to the exceeding of the top and the bottom permissible temperatures of the transported products. Most frequently on the upper surface of the tape there are additional warning inscriptions. The tape consists of the substrate layer on which on one side there is a thermochromic layer with the adjacent securing layer, and on the other side there is an adhesive layer. Thermochromic layer is made of thermochromic ink produced by South Playfield New Jersey. Many variants of execution of that tape were presented covering various forms of thermochromic layer: including a set of three parallel stripes reacting to various temperatures, or in the form of warning inscriptions.

In accordance with the utility model the warning tape for detection of hot surfaces has a multi-layer structure with a substrate layer which on one side has a thermochromic layer and an adhesive layer on the other. The substrate layer consists of a polyester foil with thickness from 20µm to 400µm, most frequently white, on which on the top there is a layer with the inscription in a warning colour and with thickness from 5µm to 50µm. The layer with inscription is covered by a monochromatic thermochromic layer with thickness from 10µm to 150µm, which is non-transparent in temperatures below 60°C and secured with a layer of a transparent polyester laminate with thickness from 5µm to 300µm. On the bottom on the substrate layer there is an adhesive layer with thickness from 10µm do 140µm, which most frequently is acrylic adhesive. The self-adhesive layer is secured by an anti-adhesive foil or paper. In temperature above 60°C the thermochromic layer is transparent for the underneath layer containing warning inscription.

The warning tape according to the utility model allows to obtain immediate visualization of overheating of the gas pipelines surface and liquid energy factor pipelines, on which the tape has been installed. After the admissible temperature is exceeded the non-transparent thermochromic layer becomes transparent revealing warning signs and colours present on the layer underneath. The self-adhesive tape is easy to use, and after temperature drops it returns to its previous condition and can be re-used an indicator for a long period of time.

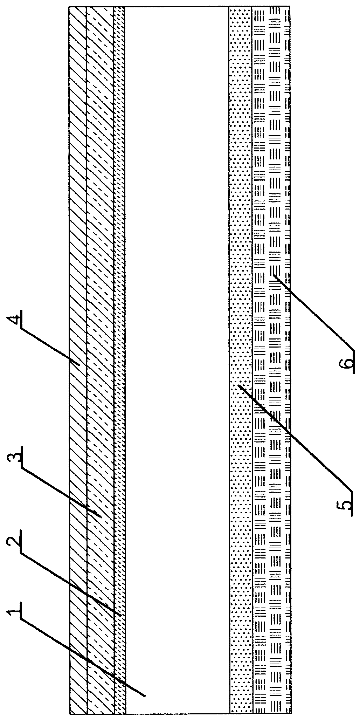

The subject of the utility model is shown on the figure which presents the warning tape for detecting hot surfaces in cross-section. The tape has a multi-layer structure and is composed of the substrate layer **1** consisting of a white polyester foil 120µm thick, on which on the top there is a layer **2** with inscription in warning colours and is 20µm thick, covered by a black thermochromic layer **3** which is 65µm thick, non-transparent in temperatures below 60°C, and which becomes transparent in temperatures above 60°C, revealing the warning inscription consisting of white and red stripes for the time for which the increased temperature sustains. After temperature drops below 60°C the thermochromic layer **3** returns immediately to its initial state. The thermochromic layer **3** is secured with a layer **4** of transparent polyester laminate 40µm thick. From the bottom, on the substrate layer **1** there is a self-adhesive layer **5** which is 60µm thick, made of acrylic adhesive, secured by an anti-adhesive paper **6** which is 80µm thick.

## Claims

1. Warning tape for detecting hot surfaces, which has a multi-layer structure with a substrate layer containing on one side a thermochromic layer, and on the other side a self-adhesive layer **characterized in that** the substrate layer (**1**) consists of polyester foil with thickness from 20µm to 400µm, on which on the top there is a layer (**2**) with inscription in warning colours and with thickness from 5µm to 50µm, covered by a monochromatic layer (**3**) with thickness from 10µm to 150µm, which is non-transparent in temperatures below 60°C and is secured by a layer (**4**) of transparent polyester laminate with thickness from 5 to 300µm, and on the bottom on the substrate layer (**1**) there is a self-adhesive layer (**5**) with thickness from 10µm to 140µm, secured by an anti-adhesive foil or paper (**6**), where in temperatures above 60°C the thermochromic layer (**3**) is transparent for the underneath layer (**2**) with the warning inscription.

2. Tape according to patent claim 1 **characterized in that** the substrate layer (**1**) consists of a polyester foil.

3. Tape according to patent claim 1 **characterized in that** the self-adhesive layer (**5**) consists of acrylic adhesive.
